(19) Europäisches Patentamt
European Patent Office
Office européen des brevets

(11) **EP 3 202 739 B1**

(12) **EUROPEAN PATENT SPECIFICATION**

(45) Date of publication and mention
of the grant of the patent:
**31.07.2024 Bulletin 2024/31**

(21) Application number: **15847933.7**

(22) Date of filing: **30.09.2015**

(51) International Patent Classification (IPC):
**B32B 17/10** (2006.01)   **C08J 5/18** (2006.01)
**C08L 29/14** (2006.01)

(52) Cooperative Patent Classification (CPC):
(C-Sets available)
**B32B 17/10761; B32B 17/10; B32B 17/10018;**
**C08J 5/18; C08L 29/14;** B32B 2367/00   (Cont.)

(86) International application number:
**PCT/JP2015/077865**

(87) International publication number:
**WO 2016/052673 (07.04.2016 Gazette 2016/14)**

(54) **USE OF RESIN FILM FOR OBTAINING GLASS PLATE-CONTAINING LAMINATE, GLASS PLATE-CONTAINING LAMINATE, AND METHOD FOR PRODUCING RESIN FILM**

VERWENDUNG EINER HARZFOLIE ZUR HERSTELLUNG EINES GLASPLATTENHALTIGEN LAMINATS, GLASPLATTENHALTIGES LAMINAT UND VERFAHREN ZUR HERSTELLUNG EINER HARZFOLIE

UTILISATION D'UN FILM DE RÉSINE POUR OBTENIR UN STRATIFIÉ CONTENANT UNE PLAQUE DE VERRE, STRATIFIÉ CONTENANT UNE PLAQUE DE VERRE ET MÉTHODE DE PRODUCTION D'UN FILM DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2014 JP 2014202620**

(43) Date of publication of application:
**09.08.2017 Bulletin 2017/32**

(73) Proprietor: **Sekisui Chemical Co., Ltd.**
**Osaka 530-8565 (JP)**

(72) Inventors:
• **YOSHIDA, Shougo**
**Kouka-shi,**
**Shiga 528-8585 (JP)**
• **UCHIMURA, Yuji**
**Kouka-shi,**
**Shiga 528-8585 (JP)**
• **MIZUMORI, Akira**
**Kouka-shi,**
**Shiga 528-8585 (JP)**
• **HIRANO, Hiroyuki**
**Kouka-shi,**
**Shiga 528-8585 (JP)**

(74) Representative: **Ter Meer Steinmeister & Partner Patentanwälte mbB**
**Nymphenburger Straße 4**
**80335 München (DE)**

(56) References cited:
EP-A1- 2 977 403        WO-A1-2005/018969
WO-A1-2014/147842       JP-A- 2004 067 427
JP-A- 2008 303 140      JP-A- H0 931 124
JP-B1- 5 420 805        US-A1- 2006 183 833
US-A1- 2010 124 647

Remarks:
The file contains technical information submitted after the application was filed and not included in this specification

(52) Cooperative Patent Classification (CPC): (Cont.)

C-Sets
**B32B 17/10005, B32B 2367/00**

## Description

### TECHNICAL FIELD

The present invention relates to the use of a resin film for obtaining a glass plate-containing laminate in which the resin film is bonded to a glass plate, and a method for producing a resin film for bonding glass plate members. Moreover, the present invention relates to a glass plate-containing laminate prepared with the resin film for bonding glass plate members.

### BACKGROUND ART

A glass plate-containing laminate in which a resin film is bonded to a glass plate has been known. Among glass plate-containing laminates, laminated glass has been widely used.

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching a resin film between a pair of glass plates.

When laminated glass is used as a windshield of a vehicle such as an automobile, the head of an occupant of the vehicle sometimes collides with the windshield when the vehicle is involved in an accident or the like. When the head of an occupant collides with the windshield, the occupant penetrates through the windshield and sometimes jumps out to the outside of the vehicle. For the purpose of protecting the safety of an occupant, it is preferred that the occupant be prevented from penetrating through the windshield even if the head of the occupant collides with the windshield.

Moreover, the regal regulation on head protection for a pedestrian has been started in various countries, the head protection has been reinforced and the regulation on leg protection has been supplementarily added. At the time of a collision between a vehicle and a pedestrian, as a portion by which a fatal wound is inflicted on the pedestrian, the head is the most frequent portion. In Japan, a testing method for digitizing the injury to a head is prescribed. While assuming a collision of the head of a pedestrian with a windshield or the like, a dummy made in imitation of the adult human head (a headform impactor) is shot from a testing machine against an object and the impact received by the headform impactor is measured to be evaluated as the head injury criteria (HIC).

There have hitherto been many windshields with an HIC of greater than 1000. On the other hand, in recent years, it has been announced that there are windshields with an HIC of 1000 or less. Moreover, in recent years, a vehicle mounted with an air bag for pedestrian protection has been developed, and the HIC is remarkably lowered.

For example, the following Patent Document 1 discloses laminated glass with an HIC of 1000 or less. Moreover, the following Patent Document 2 discloses laminated glass with which, at the time of a collision with a collision object, the reaction force received by the collision object from the glass can be reduced.

Patent Document 3 describes a laminated glass that has excellent impact-reducing properties. The laminated glass has an HIC of 1000 or less and comprises an interlayer film having a maximum stress of $\leq 20$ MPa and a deformation at break of $\geq 200\%$, wherein the interlayer film comprises a crosslinked polyvinyl acetal resin and at least 40 parts by weight of a plasticizer with respect to 100 parts by weight of the polyvinyl acetal resin. The crosslinked polyvinyl acetal resin has a degree of acetalization of 60 to 85 mol, and is preferably formed from n-butyraldehyde.

Patent Document 4 teaches a laminated glass that exhibits excellent noise insulating performance for a long period in a wide temperature range. The laminated glass comprises an interlayer film which is composed of a polyvinyl acetal resin and a plasticizer. The polyvinyl acetal resin has a degree of acetalization of 60 to 85 mol%, an amount of acetyl groups of 1 to 30 mol%, and a total of the degree of acetalization and the amount of acetyl groups of at least 70 mol%. The apparent average degree of polymerization after crosslinking is 1.2 to 8.0 times of that before crosslinking.

Patent Document 5 proposes a laminated glass that includes a stiff PVB sheet having excellent color properties even upon exposure to high temperatures during extrusion or lamination. The PVB sheet is formed from a plasticized PVB composition consisting essentially of polyvinyl butyral resin having a hydroxyl number of 15 to 25, a plasticizer or mixture of plasticizers present in an amount of less than about 30 pph based on the dry weight of the resin composition, a surfactant, and optionally a PVB bleaching compound.

### Related Art Document

### Patent Documents

Patent Document 1: WO 2005/018969 A1

Patent Document 2: JP 2005-112694 A
Patent Document 3: JP 2008-303140 A
Patent Document 4: JP 2004-067427 A
Patent Document 5: US 2006/0183833 A1

## SUMMARY OF THE INVENTION

### PROBLEMS TO BE SOLVED BY THE INVENTION

As described in Patent Document 1 or 2, a resin film in which, even if an occupant or a pedestrian collides with the laminated glass, the occupant or the pedestrian is hardly injured has been developed.

However, laminated glass prepared with a conventional resin film has yet to come to be sufficiently suppressed from being broken when an occupant or a pedestrian collides therewith.

An object of the present invention is to provide a resin film for bonding glass plate members with which, when bonded to a glass plate, breakage of the resulting glass plate-containing laminate due to impact can be suppressed and a method for producing a resin film for bonding glass plate members. Moreover, the present invention is also aimed at providing a glass plate-containing laminate prepared with the resin film for bonding glass plate members. The invention is defined by the claims.

### MEANS FOR SOLVING THE PROBLEMS

In a first aspect defined in claim 1, the present invention thus relates to the use of a resin film for obtaining a glass plate-containing laminate. In the glass plate-containing laminate, the resin film is bonded to a glass plate and includes a thermoplastic resin and a plasticizer, wherein a tensile elongation of the resin film at 25°C under a stress load of 50 N is 120 mm or more in a tensile test in accordance with JIS K7113.

The thermoplastic resin is a polyvinyl butyral resin which is obtained through a mixing step of mixing polyvinyl alcohol and an butyraldehyde and an aging step of aging a resin obtained by the mixing step, wherein the aging step includes a heating step of heating the resin obtained by the mixing step to an aging temperature and a cooling step of cooling the resin after the heating step, the cooling being started without holding the temperature of the contents after heating at a temperature of the aging temperature ±5°C for 60 minutes or more, and the aging temperature being 50°C or more and 60°C or less.

The plasticizer is triethylene glycol di-2-ethylhexanoate, wherein the content of triethylene glycol di-2-ethylhexanoate in the resin film is 20 parts by weight or more and 40 parts by weight or less relative to 100 parts by weight of the polyvinyl butyral resin in the resin film.

The glass transition temperature of the resin film is 10°C or more and 40°C or less.

In a second aspect defined in claim 2, the present invention relates to a glass plate-containing laminate. The glass plate-containing laminate includes a first glass plate and a resin film as used in the first aspect, wherein the resin film is bonded to the first glass plate.

In a specific aspect of the glass plate-containing laminate according to the present invention, the glass plate-containing laminate is provided with the first glass plate as a first laminated glass member, the resin film for bonding glass plate members and a second laminated glass member, the resin film is bonded to the first glass plate, the resin film is bonded to the second laminated glass member, and the resin film is arranged between the first glass plate and the second laminated glass member.

In a third aspect defined in claim 4, the present invention relates to a method for producing a resin film as used in the first and the second aspect. The production method includes the steps of: obtaining the thermoplastic resin which is the polyvinyl butyral resin; and molding a composition prepared by blending the thermoplastic resin which is the polyvinyl butyral resin and the plasticizer which is triethylene glycol di-2-ethylhexanoate to obtain a resin film for bonding glass plate members, wherein the step of obtaining the polyvinyl butyral resin includes a mixing step of mixing polyvinyl alcohol and an butyraldehyde and an aging step of aging a resin obtained by the mixing step, and the aging step includes a heating step of heating the resin obtained by the mixing step to an aging temperature and a cooling step of cooling the resin after the heating step, the cooling being started without holding the temperature of the contents after heating at a temperature of the aging temperature ±5°C for 60 minutes or more, and the aging temperature being 50°C or more and 60°C or less.

### EFFECT OF THE INVENTION

Since the resin film used in the present invention includes a thermoplastic resin and a plasticizer and the tensile elongation at 25°C under a stress load of 50 N is 120 mm or more in a tensile test in accordance with JIS K7113, when the resin film is bonded to the glass plate, breakage of the resulting glass plate-containing laminate due to impact can be suppressed.

**BRIEF DESCRIPTION OF DRAWINGS**

[Fig. 1] Fig. 1 is a partially cut-away sectional view showing a glass plate-containing laminate prepared with a resin film for bonding glass plate members in accordance with one embodiment of the present invention.
[Fig. 2] Fig. 2 is a partially cut-away sectional view showing a modified example of a glass plate-containing laminate prepared with a resin film for bonding glass plate members in accordance with one embodiment of the present invention.
[Fig. 3] Fig. 3 is a figure showing the shape of a test specimen used in the tensile test.
[Fig. 4] Fig. 4 is a figure for illustrating an HIC measuring apparatus.
[Fig. 5] Fig. 5 is a figure for illustrating an HIC measuring apparatus.

**MODE(S) FOR CARRYING OUT THE INVENTION**

Hereinafter, the details of the present invention will be described.

The resin film for bonding glass plate members (in the present specification, sometimes abbreviated as "the resin film") used in the present invention is bonded to a glass plate to be used.

The resin film includes a thermoplastic resin and a plasticizer. In the resin film, the tensile elongation at 25°C under a stress load of 50 N is 120 mm or more in a tensile test in accordance with JIS K7113.

In the present invention, since the resin film is provided with the above-mentioned configuration, when the resin film is bonded to a glass plate, breakage of the resulting glass plate-containing laminate due to impact can be suppressed. For example, even if an object collides with a glass plate-containing laminate, the glass plate-containing laminate is hardly broken. In the present invention, the head injury criteria (HIC) can be effectively lowered. In the present invention, even if an occupant or a pedestrian collides with the laminated glass, the occupant or the pedestrian is hardly damaged.

From the viewpoint of further suppressing damage of the glass plate-containing laminate, the tensile elongation is preferably 125 mm or more and more preferably 135 mm or more. The tensile elongation is preferably 250 mm or less and more preferably 160 mm or less.

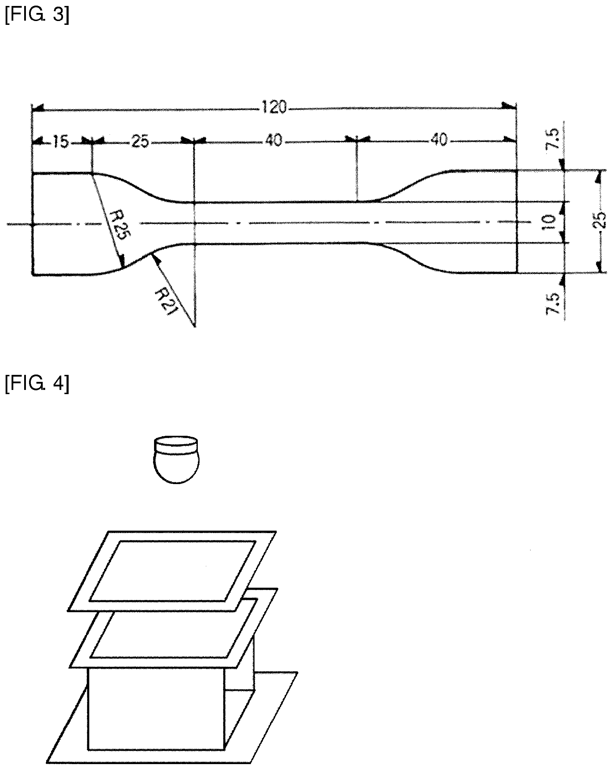

In this connection, the measurement of the tensile elongation is performed according to the following procedure. A resin composition for forming a resin film is extruded into a single-layered sheet-like shape to prepare a single-layered resin film with an average thickness of 0.76 mm. The resin film obtained is left to stand for 2 hours under the condition of 25°C and a relative humidity of 30%. Afterward, in accordance with JIS K7113 "Tensile testing methods for plastics", a test specimen is made in the shape of a dumbbell die (SDK-100) shown in Fig. 3, and a tensile test is performed using a TENSILON testing machine. The tensile test is performed under the condition of 25°C and a relative humidity of 30%, the tensile speed is set to 200 mm/minute, and the tensile test is performed until the test specimen is broken. In the measurement results obtained, the elongation amount at the time of being applied with a load of 50 N is evaluated.

Hereinafter, respective materials which can be used for the resin film will be described in detail.

(Thermoplastic resin)

A thermoplastic resin included in the resin film is a polyvinyl acetal resin, namely a polyvinyl butyral resin. By using a polyvinyl butyral resin and a plasticizer together, the adhesive force of the resin film to a glass plate, a laminated glass member or another resin film is further heightened.

The polyvinyl butyral resin is produced by acetalizing polyvinyl alcohol with a butyraldehyde. That is, the polyvinyl butyral acetal resin is an acetalized product of polyvinyl alcohol. For example, the polyvinyl alcohol can be produced by saponifying polyvinyl acetate. The saponification degree of the polyvinyl alcohol generally lies within the range of 70 to 99.9% by mole.

The average polymerization degree of the polyvinyl alcohol is preferably 200 or more, more preferably 500 or more, preferably 3500 or less, more preferably 3000 or less, further preferably 2500 or less. When the average polymerization degree is the above lower limit or more, the penetration resistance of laminated glass is further enhanced. When the average polymerization degree is the above upper limit or less, formation of a resin film is facilitated.

In this connection, the average polymerization degree of the polyvinyl alcohol is determined by a method in accordance with JIS K6726 "Testing methods for polyvinyl alcohol".

The number of carbon atoms of the acetal group contained in the polyvinyl butyral resin is not particularly limited. The aldehyde used at the time of producing the polyvinyl butyral resin is not particularly limited. It is preferred that the number of carbon atoms of the acetal group in the polyvinyl butyral resin be 3 or 4. When the number of carbon atoms of the acetal group in the polyvinyl butyral resin is 3 or more, the glass transition temperature of the resin film is sufficiently lowered.

The aldehyde is a butyraldehyde. Examples of the butyraldehyde include n-butyraldehyde and isobutyraldehyde. Of these, n-butyraldehyde is preferred. One kind of the butyraldehyde may be used alone, and two kinds thereof may be used in combination.

The content of the hydroxyl group (the amount of hydroxyl groups) of the polyvinyl butyral resin is preferably 15% by mole or more, more preferably 18% by mole or more, preferably 40% by mole or less, more preferably 35% by mole or less. When the content of the hydroxyl group is the above lower limit or more, the adhesive force of the resin film is further heightened. Moreover, when the content of the hydroxyl group is the above upper limit or less, the flexibility of the resin film is enhanced and the handling of the resin film is facilitated.

The content of the hydroxyl group of the polyvinyl butyral resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl butyral resin is preferably 0.1% by mole or more, more preferably 0.3% by mole or more, further preferably 0.5% by mole or more, preferably 30% by mole or less, more preferably 25% by mole or less, further preferably 20% by mole or less. When the acetylation degree is the above lower limit or more, the compatibility between the polyvinyl butyral resin and a plasticizer is heightened. When the acetylation degree is the above upper limit or less, with regard to the resin film and glass plate-containing laminate, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be measured in accordance with JIS K6728 "Testing methods for polyvinyl butyral".

The acetalization degree of the polyvinyl butyral resin (the butyralization degree) is preferably 60% by mole or more, more preferably 63% by mole or more, preferably 85% by mole or less, more preferably 75% by mole or less and further preferably 70% by mole or less. When the acetalization degree is the above lower limit or more, the compatibility between the polyvinyl butyral resin and a plasticizer is heightened. When the acetalization degree is the above upper limit or less, the reaction time required for producing the polyvinyl butyral resin is shortened.

The acetalization degree is a mole fraction, represented in percentage, obtained by dividing a value obtained by subtracting the amount of ethylene groups to which the hydroxyl group is bonded and the amount of ethylene groups to which the acetyl group is bonded from the total amount of ethylene groups in the main chain by the total amount of ethylene groups in the main chain.

In this connection, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral". In this context, a method in accordance with ASTM D1396-92 may be used. Since the polyvinyl acetal resin is a polyvinyl butyral resin, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral".

The polyvinyl butyral resin is obtained through a step including a mixing step of mixing the polyvinyl alcohol and the butyraldehyde and an aging step of aging a resin obtained by the mixing step.

The aging step includes a heating step of heating the contents to an aging temperature and a cooling step of cooling the contents in this order.

From the viewpoint of improving the tensile elongation, for example, at the time of synthesizing a polyvinyl butyral resin, the aging time in a holding step can be adjusted to reduce the existence ratio of adjacent hydroxyl groups. Specifically, the aging time in the holding step can be shortened to reduce the existence ratio of adjacent hydroxyl groups. According to the present invention, the resin is cooled immediately after the heating step to reduce the existence ratio of adjacent hydroxyl groups. As the resin is cooled immediately after the heating step, cooling is started without holding the temperature of the contents after heating at a temperature of the aging temperature ±5°C for 60 minutes or more, and it is preferred that cooling is started without holding the temperature of the contents after heating at a temperature of the aging temperature ±5°C for 15 minutes or more.

Separately, the aging temperature is adjusted to reduce the existence ratio of adjacent hydroxyl groups. The aging temperature is 50°C or more, and the aging temperature is 60°C or less. It is preferred that a kind of acid added to the polyvinyl butyral resin be hydrochloric acid or nitric acid.

(Plasticizer)

From the viewpoint of further heightening the adhesive force of a resin film, the resin film includes a plasticizer.

The plasticizer is a monobasic organic acid ester, namely an ester of triethylene glycol with 2-ethylhexanoic acid. More specifically, the plasticizer is triethylene glycol di-2-ethylhexanoate (3GO).

Relative to 100 parts by weight of the thermoplastic resin, the content of the plasticizer is 40 parts by weight or less. When the content of the plasticizer is not less than the above lower limit, the penetration resistance of laminated glass is further enhanced. When the content of the plasticizer is not more than the above upper limit, the transparency of the resin film is further enhanced.

From the viewpoint of further suppressing damage of the glass plate-containing laminate, the plasticizer is triethylene glycol di-2-ethylhexanoate, and relative to 100 parts by weight of the thermoplastic resin, the content of triethylene glycol di-2-ethylhexanoate is 20 parts by weight or more and 40 parts by weight or less.

(Other ingredients)

The resin film may include additives such as an ultraviolet ray screening agent, an oxidation inhibitor, a light stabilizer, a flame retardant, an antistatic agent, a pigment, a dye, a moisture-resistance improving agent, an adhesive force regulating agent, a fluorescent brightening agent and an infrared ray absorber, as necessary. One kind of these additives may be used alone, and two or more kinds thereof may be combinedly used.

(Other details of resin film)

From the viewpoints of further effectively lowering the HIC and effectively enhancing the penetration resistance of laminated glass, the glass transition temperature of the resin film is 10°C or more, preferably 15°C or more, further preferably 20°C or more, and 40°C or less, preferably 35°C or less.

The thickness of the resin film is not particularly limited. From the viewpoint of the practical aspect and the viewpoint of sufficiently heightening the heat shielding properties, the thickness of the resin film is preferably 0.1 mm or more, more preferably 0.25 mm or more, preferably 3 mm or less and more preferably 1.5 mm or less. When the thickness of the resin film is not less than the above lower limit, the penetration resistance of laminated glass is enhanced. When the thickness of the resin film is not more than the above upper limit, the transparency of the resin film is further improved.

The production method of the resin film can be a production method of kneading ingredients to be blended and forming the kneaded product into a resin film, and the like. A production method of extrusion-molding is preferred because the method is suitable for continuous production.

Above all, the production method of the resin film comprises a step of obtaining a polyvinyl butyral resin as the thermoplastic resin and a step of molding a composition prepared by blending the polyvinyl butyral resin and the plasticizer to obtain a resin film for bonding glass plate members. The step of obtaining the polyvinyl butyral resin includes a mixing step of mixing polyvinyl alcohol and a butyraldehyde and an aging step of aging a resin obtained by the mixing step. The aging step includes a heating step of heating the resin obtained by the mixing step to an aging temperature and a cooling step of cooling the resin immediately after the heating step.

The method for kneading is not particularly limited. Examples of this method include a method using an extruder, a plastograph, a kneader, a banbury mixer, a calender roll, or the like. Of these, a method using an extruder is preferred and a method using a twin screw extruder is more preferred because the methods are suitable for continuous production.

The resin film may be used alone for a sheet of laminated glass and may be used together with another resin film for a sheet of laminated glass. The resin film in a state of being layered on another resin film can be used as a multilayer resin film.

(Glass plate-containing laminate)

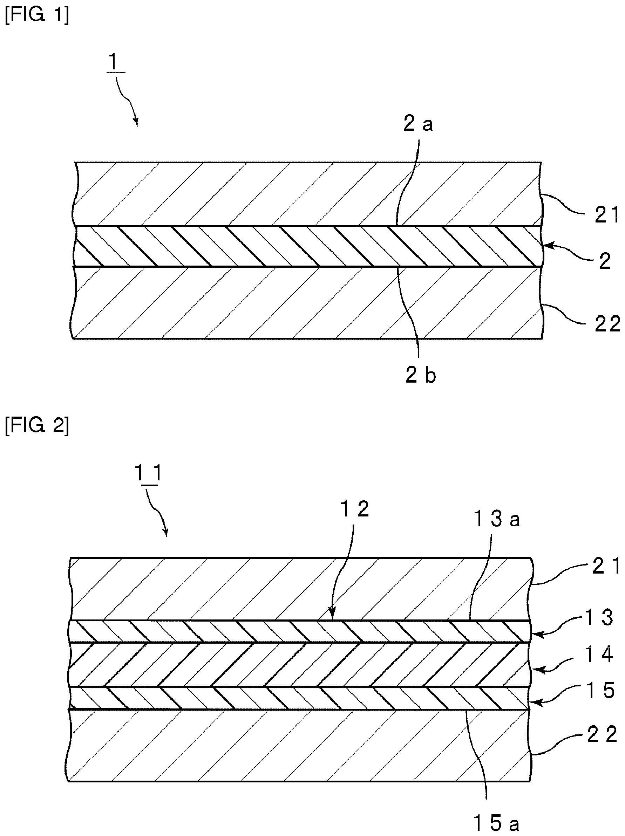

Fig. 1 is a sectional view showing an example of a glass plate-containing laminate prepared with a resin film bonded to a glass plate in accordance with one embodiment of the present invention.

A glass plate-containing laminate 1 shown in Fig. 1 is provided with a resin film 2, a first laminated glass member 21 (a first glass plate) and a second laminated glass member 22 (may be a second glass plate). The resin film 2 is a single-layered resin film. The resin film 2 is used for obtaining a glass plate-containing laminate. The resin film 2 is a resin film bonded to a glass plate to be used. The glass plate-containing laminate 1 is a sheet of laminated glass.

The resin film 2 is arranged between the first laminated glass member 21 and the second laminated glass member 22 to be sandwiched therebetween. The first laminated glass member 21 is layered on a first surface 2a (one surface) of the resin film 2. The second laminated glass member 22 is layered on a second surface 2b (the other surface) opposite to the first surface 2a of the resin film 2.

Fig. 2 is a sectional view showing a modified example of a glass plate-containing laminate prepared with a resin film bonded to a glass plate in accordance with one embodiment of the present invention.

A glass plate-containing laminate 11 shown in Fig. 2 is provided with a resin film 12, a first laminated glass member 21 (a first glass plate) and a second laminated glass member 22. The resin film 12 is a multi-layered resin film. The resin film 12 is used for obtaining a glass plate-containing laminate. The resin film 12 is a resin film bonded to a glass plate to be used. The glass plate-containing laminate 11 is a sheet of laminated glass.

The resin film 12 has a structure in which three resin films of a first layer 13 (a resin film), a second layer 14 (a resin film) and a third layer 15 (a resin film) are layered in this order. In the present embodiment, the second layer 14 is a sound insulating layer. As the second layer 14, the resin film in accordance with the present disclosure is used. The second layer 14 is bonded to the first and second laminated glass members 21, 22 through the first and third layers 13, 15 respectively. The first and third layers 13, 15 are protective layers. The first and third layers 13, 15 may also be resin films in accordance with the present disclosure.

The resin film 12 is arranged between the first laminated glass member 21 and the second laminated glass member 22 to be sandwiched therebetween. The second layer 14 (a resin film) is interposed between the first and third layers 13, 15 to be arranged between the first laminated glass member 21 and the second laminated glass member 22. The first laminated glass member 21 is layered on an outer surface 13a of the first layer 13. The second laminated glass member 22 is layered on an outer surface 15a of the second layer 15.

As described above, the glass plate-containing laminate according to the present invention needs only to be provided with a first glass plate and a resin film in accordance with the present disclosure. It is preferred that the resin film be arranged between the first laminated glass member (a first glass plate) and the second laminated glass member. The glass plate-containing laminate may be provided with only a resin film bonded to a glass plate in accordance with the present disclosure as the resin film, and may be provided with a resin film bonded to a glass plate in accordance with the present disclosure and another resin film as the resin film. The glass plate-containing laminate includes at least the resin film bonded to a glass plate in accordance with the present disclosure.

Examples of the laminated glass member include a glass plate, a PET (polyethylene terephthalate) film, and the like. As the laminated glass, laminated glass in which a resin film is sandwiched between a glass plate and a PET film or the like, as well as laminated glass in which a resin film is sandwiched between two glass plates, is included. Laminated glass is a laminate provided with a glass plate, and it is preferred that at least one glass plate be used. It is preferred that the second laminated glass member be a glass plate or a PET film.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of the laminated glass member is preferably 1 mm or more, preferably 5 mm or less and more preferably 3 mm or less. Moreover, the thickness of the glass plate is preferably 1 mm or more, preferably 5 mm or less and more preferably 3 mm or less. When the laminated glass member is a PET film, the thickness of the PET film is preferably 0.03 mm or more and preferably 0.5 mm or less.

The production method of the glass plate-containing laminate comprises bonding the resin film to the first glass plate to obtain a glass plate-containing laminate. Furthermore, for example, a resin film is sandwiched between a first laminated glass member and a second laminated glass member, and the air remaining between the first laminated glass member and the resin film and between the second laminated glass member and the resin film is removed by passing the members through a pressing roll or by putting the members into a rubber bag to be sucked under reduced pressure. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass, which is a glass plate-containing laminate, can be obtained.

Each of the resin film and the glass plate-containing laminate can be used for automobiles, railway vehicles, aircraft, ships, buildings and the like. Each of the resin film and the glass plate-containing laminate can also be used for applications other than these applications. It is preferred that the resin film and the glass plate-containing laminate be a resin film and a glass plate-containing laminate for vehicles or for building respectively, and it is more preferred that the resin film and the glass plate-containing laminate be a resin film and a glass plate-containing laminate for vehicles respectively. Each of the resin film and the glass plate-containing laminate can be used for a windshield, side glass, rear glass or roof glass of an automobile, and the like.

Hereinafter, the present invention will be described in more detail with reference to examples below. The present invention is not limited only to these examples.

With regard to the polyvinyl butyral (PVB) resin used in the following examples and comparative examples, the butyralization degree (the acetalization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

(Synthesis Example 1)

In a reactor equipped with a stirring apparatus, 3400 ml of ion-exchanged water and 300 g of polyvinyl alcohol (the average polymerization degree of 1700, the saponification degree of 99% by mole) were placed, and the contents were heated and dissolved with stirring to obtain a solution. Next, to this solution, 60% by weight nitric acid as a catalyst was added so that the nitric acid concentration becomes 0.45% by weight, the temperature was adjusted to 15°C, and then, 30 g of n-butyraldehyde was added with stirring. Afterward, 137 g of n-butyraldehyde was added, whereupon a polyvinyl butyral resin in a white particulate form precipitated. At the end of 15 minutes after the precipitation, 60% by weight nitric acid was added so that the nitric acid concentration becomes 1.6% by weight, the contents were heated to 60°C, the solution was cooled at the point of time when the temperature reached 60°C and neutralized, after which the polyvinyl butyral resin was washed with water and dried to obtain a polyvinyl butyral resin (1).

(Synthesis Example 2)

In a reactor equipped with a stirring apparatus, 3400 ml of ion-exchanged water and 300 g of polyvinyl alcohol (the average polymerization degree of 1700, the saponification degree of 99% by mole) were placed, and the contents were heated and dissolved with stirring to obtain a solution. Next, to this solution, 60% by weight nitric acid as a catalyst was added so that the nitric acid concentration becomes 0.45% by weight, the temperature was adjusted to 15°C, and then, 30 g of n-butyraldehyde was added with stirring. Afterward, 154 g of n-butyraldehyde was added, whereupon a polyvinyl butyral resin in a white particulate form precipitated. At the end of 15 minutes after the precipitation, 60% by weight nitric acid was added so that the nitric acid concentration becomes 1.6% by weight, the contents were heated to 55°C, the solution was cooled at the point of time when the temperature reached 55°C and neutralized, after which the polyvinyl butyral resin was washed with water and dried to obtain a polyvinyl butyral resin (2).

(Synthesis Example 3)

In a reactor equipped with a stirring apparatus, 3400 ml of ion-exchanged water and 300 g of polyvinyl alcohol (the average polymerization degree of 1700, the saponification degree of 99% by mole) were placed, and the contents were heated and dissolved with stirring to obtain a solution. Next, to this solution, 60% by weight nitric acid as a catalyst was added so that the nitric acid concentration becomes 0.45% by weight, the temperature was adjusted to 15°C, and then, 30 g of n-butyraldehyde was added with stirring. Afterward, 137 g of n-butyraldehyde was added, whereupon a polyvinyl butyral resin in a white particulate form precipitated. At the end of 15 minutes after the precipitation, 60% by weight nitric acid was added so that the nitric acid concentration becomes 1.6% by weight, the contents were heated to 55°C, the solution was cooled at the point of time when the temperature reached 55°C and neutralized, after which the polyvinyl butyral resin was washed with water and dried to obtain a polyvinyl butyral resin (3).

(Synthesis Example 4)

In a reactor equipped with a stirring apparatus, 3400 ml of ion-exchanged water and 300 g of polyvinyl alcohol (the average polymerization degree of 1700, the saponification degree of 99% by mole) were placed, and the contents were heated and dissolved with stirring to obtain a solution. Next, to this solution, 60% by weight nitric acid as a catalyst was added so that the nitric acid concentration becomes 0.45% by weight, the temperature was adjusted to 15°C, and then, 30 g of n-butyraldehyde was added with stirring. Afterward, 137 g of n-butyraldehyde was added, whereupon a polyvinyl butyral resin in a white particulate form precipitated. At the end of 15 minutes after the precipitation, 60% by weight nitric acid was added so that the nitric acid concentration becomes 1.6% by weight, the contents were heated to 50°C, the solution was cooled at the point of time when the temperature reached 50°C and neutralized, after which the polyvinyl butyral resin was washed with water and dried to obtain a polyvinyl butyral resin (4).

(Synthesis Example 5)

In a reactor equipped with a stirring apparatus, 2700 ml of ion-exchanged water and 300 g of polyvinyl alcohol (the average polymerization degree of 1700, the saponification degree of 99% by mole) were placed, and the contents were heated and dissolved with stirring to obtain a solution. Next, to this solution, 60% by weight nitric acid as a catalyst was added so that the nitric acid concentration becomes 0.4% by weight, the temperature was adjusted to 15°C, and then, 23 g of n-butyraldehyde was added with stirring. Afterward, 140 g of n-butyraldehyde was added, whereupon a polyvinyl butyral resin in a white particulate form precipitated. At the end of 15 minutes after the precipitation, 60% by weight nitric acid was added so that the nitric acid concentration becomes 1.6% by weight, and the contents were heated to 65°C and aged for 2 hours at 65°C. Then, the solution was cooled and neutralized, after which the polyvinyl butyral resin was washed with water and dried to obtain a polyvinyl butyral resin (A).

(Synthesis Example 6)

In a reactor equipped with a stirring apparatus, 2700 ml of ion-exchanged water and 300 g of polyvinyl alcohol (the average polymerization degree of 2300, the saponification degree of 87.5% by mole) were placed, and the contents were heated and dissolved with stirring to obtain a solution. Next, to this solution, 35% by weight hydrochloric acid as a catalyst was added so that the hydrochloric acid concentration becomes 0.6% by weight, the temperature was adjusted to 15°C, and then, 14.2 g of n-butyraldehyde was added with stirring. Afterward, 170 g of n-butyraldehyde was added, whereupon a polyvinyl butyral resin in a white particulate form precipitated. At the end of 15 minutes after the precipitation, 35% by weight hydrochloric acid was added so that the hydrochloric acid concentration becomes 3.9% by weight, and the contents were heated to 45°C and aged for 3 hours at 45°C. Then, the solution was cooled and neutralized, after which the polyvinyl butyral resin was washed with water and dried to obtain a polyvinyl butyral resin (B).

(Example 1)

Preparation of resin film:

To 100 parts by weight of a polyvinyl butyral resin (1), 40 parts by weight of triethylene glycol di-2-ethylhexanoate (3GO), which is a plasticizer, was added and thoroughly kneaded with a mixing roll to obtain a composition.

The composition obtained was extruded by an extruder to obtain a single-layered resin film (760 $\mu$m in average thickness).

Preparation of laminated glass:

The resin film obtained was cut into a size of 110 cm in longitudinal length × 110 cm in transversal length. Next, the resin film was sandwiched between two sheets of clear glass (110 cm in longitudinal length × 110 cm in transversal length × 2.5 mm in thickness), held in place for 30 minutes at 90°C and pressed under vacuum with a vacuum laminator to obtain a sheet of laminated glass.

(Examples 2 to 4 and Comparative Examples 1, 2)

A resin film and a sheet of laminated glass were obtained in the same manner as that in Example 1 except that the kind of ingredients to be blended for the composition and the blending amount thereof were set to those listed in the following Table 1.

(Evaluation)

(1) Glass transition temperature

Resin films with an average thickness of 0.76 mm obtained in examples and comparative examples were left to stand for 2 hours under the condition of 25°C and a relative humidity of 30%. Afterward, the viscoelasticity thereof was measured by means of the ARES-G2 available from TA Instruments Japan Inc. As a jig, a parallel plate with a diameter of 8 mm was used. The measurement was performed under the condition in which the temperature is decreased from 100°C to -10°C at a temperature decreasing rate of 3°C/minute and under the condition of a frequency of 1 Hz and a strain of 1%. In the measurement results obtained, the peak temperature of the loss tangent was defined as the glass transition temperature Tg (°C).

(2) Tensile elongation

Resin films with an average thickness of 0.76 mm obtained in examples and comparative examples were left to stand for 2 hours under the condition of 25°C and a relative humidity of 30%. Afterward, in accordance with JIS K7113 "Tensile testing methods for plastics", a test specimen was made in the shape of a dumbbell die (SDK-100) shown in Fig. 3, and a tensile test was performed using a TENSILON testing machine. The tensile test was performed under the condition of 25°C and a relative humidity of 30%, the tensile speed was set to 200 mm/minute, and the tensile test was performed until the test specimen is broken. In the measurement results obtained, the elongation amount at the time of being applied with a load of 50 N was evaluated.

(3) Breaking energy

A resin film with an average thickness of 0.76 mm was left to stand for 2 hours under the condition of 25°C and a relative humidity of 30%. Afterward, in accordance with JIS K7113 "Tensile testing methods for plastics", a test specimen was made in the shape of a dumbbell die (SDK-100) shown in Fig. 3, and a tensile test was performed using a TENSILON testing machine to prepare a stress-strain curve. The tensile test was performed under the condition of 25°C and a relative humidity of 30%, the tensile speed was set to 200 mm/minute, and the tensile test was performed until the test specimen is broken. From the area of a region surrounded by the stress-strain curve obtained and the x-axis, the breaking energy was determined.

(4) HIC

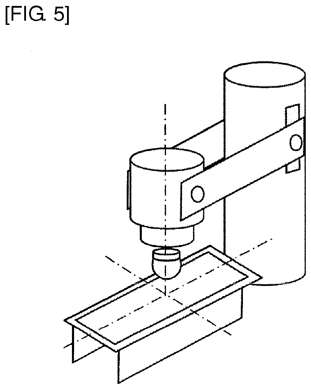

A sheet of laminated glass was cut into a size of 50 cm in longitudinal length by 110 cm in transversal length to prepare a Sample 2. Using an HIC measuring apparatus having a structure shown in Fig. 4 and Fig. 5, the sample was measured for the HIC. As shown in the figure, the HIC apparatus has such a structure that the outer peripheral part of a sheet of laminated glass is fixed thereby. With regard to the headform impactor, the metal-made core thereof is attached with a resin-made head skin with a hemispherical shape. A triaxial direction acceleration sensor is installed therein. The headform impactor is a dummy which is made in imitation of the human head and used in "a pedestrian protection performance test" for the certification test for automobiles such as NCAP. By means of the apparatus shown in the figure, the headform impactor was shot at a speed of 35 km/h to the center of the sheet of laminated glass and brought into collision with the sheet of laminated glass.

The HIC is calculated from the following equation. In the equation, a represents the resultant acceleration of an impact head, and t2 - t1 is defined as a time interval of 15 ms. With regard to the specific testing method, the test was performed according to the contents described in "Safety standards for road trucking vehicles: Public notice of details, Appendix 99, Technical standards for pedestrian head protection" published by Ministry of Land, Infrastructure, Transport and Tourism. The HIC was judged according to the following criteria.

$$\text{HIC} = \left( \frac{1}{t2-t1} \int_{t1}^{t2} \frac{a}{9.8} dt \right)^{2.5} (\text{t2-t1})$$

Criteria for judgment in [HIC]

Two circles: The HIC is 200 or less.

One circle: The HIC is greater than 200 and 350 or less.

X mark: The HIC is greater than 350.

The results are shown in the following Table 1.

[Table 1]

| | | | Ex. 1 | Ex. 2 | Ex. 3 | Ex. 4 | Comp. Ex. 1 | Comp. Ex. 2 |
|---|---|---|---|---|---|---|---|---|
| Constitution of interlayer film | Kind of thermoplastic resin (described in synthesis example) | | (1) | (2) | (3) | (4) | (A) | (B) |
| | Content of thermoplastic resin (parts by weight) | | 100 | 100 | 100 | 100 | 100 | 100 |
| | Kind of plasticizer | | 3GO | 3GO | 3GO | 3GO | 3GO | 3GO |
| | Content of plasticizer (parts by weight) | | 40 | 40 | 40 | 40 | 40 | 40 |
| | Thickness ($\mu$m) | | 760 | 760 | 760 | 760 | 760 | 760 |
| Evaluation | Glass transition temperature (°C) | | 22 | 23 | 27 | 31 | 27 | 18.3 |
| | Tensile elongation (elongation amount at the time of being applied with 50 N load) (mm) | | 140 | 140 | 140 | 120 | 105 | Breakage |
| | Breaking energy (J) | | 4.8 | 5.6 | 10.5 | 20.5 | 12.5 | 2 |
| | HIC ("One circle" represents an HIC value of 350 or less, and "Two circles" represent an HIC value of 200 or less.) | | OO | ○○ | ○○ | ○ | × | - |

## EXPLANATION OF SYMBOLS

1:     Glass plate-containing laminate (laminated glass)
2:     Resin film
2a:    First surface
2b:    Second surface
11:    Glass plate-containing laminate (laminated glass)
12:    Resin film
13:    First layer (resin film)
14:    Second layer (resin film)
15:    Third layer (resin film)
13a:   Outer surface
15a:   Outer surface
21:    First laminated glass member (first glass plate)
22:    Second laminated glass member

## Claims

1. Use of a resin film for obtaining a glass plate-containing laminate in which the resin film is bonded to a glass plate,

    wherein the resin film comprises a thermoplastic resin and a plasticizer,
    a tensile elongation of the resin film at 25°C under a stress load of 50 N, as measured according to the method in the description, is 120 mm or more in a tensile test in accordance with JIS K7113
    the thermoplastic resin is a polyvinyl butyral resin,
    the plasticizer is triethylene glycol di-2-ethylhexanoate, the content of the plasticizer which is triethylene glycol di-2-ethylhexanoate in the resin film is 20 parts by weight or more and 40 parts by weight or less relative to 100 parts by weight of the thermoplastic resin which is the polyvinyl butyral resin in the resin film,
    the glass transition temperature of the resin film, as measured according to the method in the description, is 10°C or more and 40°C or less, and
    the polyvinyl butyral resin is obtained through a mixing step of mixing polyvinyl alcohol and an butyraldehyde and an aging step of aging a resin obtained by the mixing step,

wherein the aging step includes a heating step of heating the resin obtained by the mixing step to an aging temperature and a cooling step of cooling the resin after the heating step, the cooling being started without holding the temperature of the contents after heating at a temperature of the aging temperature ±5°C for 60 minutes or more, the aging temperature being 50°C or more and 60°C or less.

2. A glass plate-containing laminate, comprising a first glass plate and a resin film,

wherein the resin film is bonded to the first glass plate,
the resin film comprises a thermoplastic resin and a plasticizer,
a tensile elongation of the resin film at 25°C under a stress load of 50 N, as measured according to the method in the description, is 120 mm or more in a tensile test in accordance with JIS K7113,
the thermoplastic resin is a polyvinyl butyral resin,
the plasticizer is triethylene glycol di-2-ethylhexanoate, the content of the plasticizer which is triethylene glycol di-2-ethylhexanoate in the resin film is 20 parts by weight or more and 40 parts by weight or less relative to 100 parts by weight of the thermoplastic resin which is the polyvinyl butyral resin in the resin film,
the glass transition temperature of the resin film, as measured according to the method in the description, is 10°C or more and 40°C or less, and
the polyvinyl butyral resin is obtained through a mixing step of mixing polyvinyl alcohol and an butyraldehyde and an aging step of aging a resin obtained by the mixing step,
wherein the aging step includes a heating step of heating the resin obtained by the mixing step to an aging temperature and a cooling step of cooling the resin after the heating step, the cooling being started without holding the temperature of the contents after heating at a temperature of the aging temperature ±5°C for 60 minutes or more, the aging temperature being 50°C or more and 60°C or less.

3. The glass plate-containing laminate according to claim 2, being provided with the first glass plate as a first laminated glass member, the resin film and a second laminated glass member,

wherein the resin film is bonded to the first glass plate,
the resin film is bonded to the second laminated glass member, and
the resin film is arranged between the first glass plate and the second laminated glass member.

4. A method for producing a resin film, which comprises a thermoplastic resin and a plasticizer and has a tensile elongation of the resin film at 25°C under a stress load of 50 N, as measured according to the method in the description, being 120 mm or more in a tensile test in accordance with JIS K7113, wherein the thermoplastic resin is a polyvinyl butyral resin, the plasticizer is triethylene glycol di-2-ethylhexanoate, the content of the plasticizer which is triethylene glycol di-2-ethylhexanoate in the resin film is 20 parts by weight or more and 40 parts by weight or less relative to 100 parts by weight of the thermoplastic resin which is the polyvinyl butyral resin in the resin film, and the glass transition temperature of the resin film, as measured according to the method in the description, is 10°C or more and 40°C or less,

the method comprising the steps of:

obtaining the thermoplastic resin which is the polyvinyl butyral resin; and
molding a composition prepared by blending the thermoplastic resin which is the polyvinyl butyral resin and the plasticizer which is triethylene glycol di-2-ethylhexanoate to obtain a resin film,
wherein the step of obtaining the polyvinyl butyral resin includes a mixing step of mixing polyvinyl alcohol and an butyraldehyde and an aging step of aging a resin obtained by the mixing step, and
the aging step includes a heating step of heating the resin obtained by the mixing step to an aging temperature and a cooling step of cooling the resin after the heating step, the cooling being started without holding the temperature of the contents after heating at a temperature of the aging temperature ±5°C for 60 minutes or more, the aging temperature being 50°C or more and 60°C or less.

5. A method for producing the glass plate-containing laminate according to any one of claims 2 or 3, the method comprising the steps of:

obtaining the thermoplastic resin which is the polyvinyl butyral resin; and
molding a composition prepared by blending the thermoplastic resin which is the polyvinyl butyral resin and the plasticizer which is triethylene glycol di-2-ethylhexanoate to obtain a resin film,
bonding the resin film to the first glass plate to obtain the glass plate-containing laminate,

wherein the step of obtaining the polyvinyl butyral resin includes a mixing step of mixing polyvinyl alcohol and butyraldehyde and an aging step of aging a resin obtained by the mixing step, and

the aging step includes a heating step of heating the resin obtained by the mixing step to an aging temperature and a cooling step of cooling the resin after the heating step, the cooling being started without holding the temperature of the contents after heating at a temperature of the aging temperature ±5°C for 60 minutes or more, the aging temperature being 50°C or more and 60°C or less.

**Patentansprüche**

1. Verwendung einer Harzfolie zur Herstellung eines eine Glasplatte enthaltenden Laminats, bei dem die Harzfolie mit einer Glasplatte verbunden ist,

   wobei die Harzfolie ein thermoplastisches Harz und einen Weichmacher enthält, die Zugdehnung der Harzfolie bei 25°C unter einer Spannungsbelastung von 50 N, gemessen gemäß dem Verfahren in der Beschreibung, 120 mm oder mehr in einem Zugtest gemäß JIS K7113 beträgt,
   das thermoplastische Harz ein Polyvinylbutyralharz ist,
   der Weichmacher Triethylenglykoldi-2-ethylhexanoat ist, der Gehalt des Weichmachers, der Triethylenglykoldi-2-ethylhexanoat ist, in der Harzfolie 20 Gewichtsteile oder mehr und 40 Gewichtsteile oder weniger beträgt, bezogen auf 100 Gewichtsteile des thermoplastischen Harzes, das das Polyvinylbutyralharz in der Harzfolie ist, die Glasübergangstemperatur der Harzfolie, gemessen gemäß dem Verfahren in der Beschreibung, 10°C oder mehr und 40°C oder weniger beträgt, und
   das Polyvinylbutyralharz durch einen Mischschritt des Mischens von Polyvinylalkohol und einem Butyraldehyd und einen Alterungsschritt des Alterns eines durch den Mischschritt erhaltenen Harzes erhalten wird,
   wobei der Alterungsschritt einen Heizschritt des Erhitzens des durch den Mischschritt erhaltenen Harzes auf eine Alterungstemperatur und einen Kühlschritt des Abkühlens des Harzes nach dem Heizschritt umfasst, wobei das Abkühlen begonnen wird, ohne die Temperatur des Inhalts nach dem Erhitzen bei einer Temperatur der Alterungstemperatur ±5°C für 60 Minuten oder mehr zu halten, wobei die Alterungstemperatur 50°C oder mehr und 60°C oder weniger beträgt.

2. Glasplattenhaltiges Laminat, umfassend eine erste Glasplatte und eine Harzfolie,

   wobei die Harzfolie mit der ersten Glasplatte verbunden ist,
   die Harzfolie ein thermoplastisches Harz und einen Weichmacher enthält,
   die Zugdehnung der Harzfolie bei 25°C unter einer Spannungsbelastung von 50 N, gemessen gemäß dem Verfahren in der Beschreibung, 120 mm oder mehr in einem Zugtest gemäß JIS K7113 beträgt,
   das thermoplastische Harz ein Polyvinylbutyralharz ist,
   der Weichmacher Triethylenglykoldi-2-ethylhexanoat ist, der Gehalt des Weichmachers, der Triethylenglykoldi-2-ethylhexanoat ist, in der Harzfolie 20 Gewichtsteile oder mehr und 40 Gewichtsteile oder weniger beträgt, bezogen auf 100 Gewichtsteile des thermoplastischen Harzes, das das Polyvinylbutyralharz in der Harzfolie ist, die Glasübergangstemperatur der Harzfolie, gemessen gemäß dem Verfahren in der Beschreibung, 10°C oder mehr und 40°C oder weniger beträgt, und
   das Polyvinylbutyralharz durch einen Mischschritt des Mischens von Polyvinylalkohol und einem Butyraldehyd und einen Alterungsschritt des Alterns eines durch den Mischschritt erhaltenen Harzes erhalten wird,
   wobei der Alterungsschritt einen Heizschritt des Erhitzens des durch den Mischschritt erhaltenen Harzes auf eine Alterungstemperatur und einen Kühlschritt des Abkühlens des Harzes nach dem Heizschritt umfasst, wobei das Abkühlen begonnen wird, ohne die Temperatur des Inhalts nach dem Erhitzen bei einer Temperatur der Alterungstemperatur ±5°C für 60 Minuten oder mehr zu halten, wobei die Alterungstemperatur 50°C oder mehr und 60°C oder weniger beträgt.

3. Glasplattenhaltiges Laminat nach Anspruch 2, das mit der ersten Glasplatte als erstem laminierten Glaselement, der Harzfolie und einem zweiten laminierten Glaselement versehen ist,

   wobei die Harzfolie mit der ersten Glasplatte verbunden ist,
   die Harzfolie mit dem zweiten laminierten Glaselement verbunden ist, und
   die Harzfolie zwischen der ersten Glasplatte und dem zweiten laminierten Glaselement angeordnet ist.

4. Verfahren zur Herstellung einer Harzfolie, die ein thermoplastisches Harz und einen Weichmacher umfasst und eine Zugdehnung der Harzfolie bei 25°C unter einer Spannungsbelastung von 50 N, gemessen gemäß dem Verfahren in der Beschreibung, von 120 mm oder mehr in einem Zugtest gemäß JIS K7113 aufweist, wobei das thermoplastische Harz ein Polyvinylbutyralharz ist,

der Weichmacher Triethylenglykoldi-2-ethylhexanoat ist, der Gehalt des Weichmachers, der Triethylenglykoldi-2-ethylhexanoat ist, in der Harzfolie 20 Gewichtsteile oder mehr und 40 Gewichtsteile oder weniger beträgt, bezogen auf 100 Gewichtsteile des thermoplastischen Harzes, das das Polyvinylbutyralharz in der Harzfolie ist, und die Glasübergangstemperatur der Harzfolie, gemessen gemäß dem Verfahren in der Beschreibung, 10°C oder mehr und 40°C oder weniger beträgt,
wobei das Verfahren die Schritte umfasst:

Erhalten des thermoplastischen Harzes, das das Polyvinylbutyralharz ist, und Formen einer Zusammensetzung, die durch Mischen des thermoplastischen Harzes, bei dem es sich um das Polyvinylbutyralharz handelt, und des Weichmachers, bei dem es sich um Triethylenglykoldi-2-ethylhexanoat handelt, hergestellt wird, um eine Harzfolie zu erhalten,
wobei der Schritt des Erhaltens des Polyvinylbutyralharzes einen Mischschritt des Mischens von Polyvinylalkohol und einem Butyraldehyd und einen Alterungsschritt des Alterns eines durch den Mischschritt erhaltenen Harzes umfasst, und
wobei der Alterungsschritt einen Heizschritt des Erhitzens des durch den Mischschritt erhaltenen Harzes auf eine Alterungstemperatur und einen Kühlschritt des Abkühlens des Harzes nach dem Heizschritt umfasst, wobei das Abkühlen begonnen wird, ohne die Temperatur des Inhalts nach dem Erhitzen bei einer Temperatur der Alterungstemperatur ±5°C für 60 Minuten oder mehr zu halten, wobei die Alterungstemperatur 50°C oder mehr und 60°C oder weniger beträgt.

5. Verfahren zur Herstellung des glasplattenhaltigen Laminats nach einem der Ansprüche 2 oder 3, wobei das Verfahren die Schritte umfasst:

Erhalten des thermoplastischen Harzes, das das Polyvinylbutyralharz ist, und Formen einer Zusammensetzung, die durch Mischen des thermoplastischen Harzes, bei dem es sich um das Polyvinylbutyralharz handelt, und des Weichmachers, bei dem es sich um Triethylenglykoldi-2-ethylhexanoat handelt, hergestellt wird, um eine Harzfolie zu erhalten,
Verbinden der Harzfolie mit der ersten Glasplatte, um das glasplattenhaltige Laminat zu erhalten,
wobei der Schritt des Erhaltens des Polyvinylbutyralharzes einen Mischschritt des Mischens von Polyvinylalkohol und einem Butyraldehyd und einen Alterungsschritt des Alterns eines durch den Mischschritt erhaltenen Harzes umfasst, und
wobei der Alterungsschritt einen Heizschritt des Erhitzens des durch den Mischschritt erhaltenen Harzes auf eine Alterungstemperatur und einen Kühlschritt des Abkühlens des Harzes nach dem Heizschritt umfasst, wobei das Abkühlen begonnen wird, ohne die Temperatur des Inhalts nach dem Erhitzen bei einer Temperatur der Alterungstemperatur ±5°C für 60 Minuten oder mehr zu halten, wobei die Alterungstemperatur 50°C oder mehr und 60°C oder weniger beträgt.

## Revendications

1. Utilisation d'un film de résine pour obtenir un stratifié contenant une plaque de verre dans laquelle le film de résine est assemblé à une plaque de verre,

dans laquelle le film de résine comporte une résine thermoplastique et un plastifiant,
un allongement en traction du film de résine à 25 °C sous une charge de contrainte de 50 N, lorsque mesuré conformément au procédé de la description, est de 120 mm ou plus dans un essai de traction conformément à la norme JIS K7113,
la résine thermoplastique est une résine de butyral polyvinylique,

le plastifiant est le di-2-éthylhexanoate de triéthylène glycol, la teneur du plastifiant, qui est le di-2-éthylhexanoate de triéthylène glycol, dans le film de résine est de 20 parties en poids ou plus et de 40 parties en poids ou moins par rapport à 100 parties en poids de la résine thermoplastique qui est la résine de butyral polyvinylique dans le film de résine,
la température de transition vitreuse du film de résine, lorsque que mesurée conformément au procédé de la description, est de 10 °C ou plus et de 40 °C ou moins, et

la résine de butyral polyvinylique est obtenue par une étape de mélange consistant à mélanger de l'alcool polyvinylique et un butyraldéhyde, et une étape de vieillissement consistant à faire vieillir une résine obtenue par l'étape de mélange,
dans laquelle l'étape de vieillissement inclut une étape de chauffage consistant à chauffer la résine obtenue par l'étape de mélange jusqu'à une température de vieillissement, et une étape de refroidissement consistant à refroidir la résine après l'étape de chauffage, le refroidissement étant démarré sans maintenir la température du contenu après chauffage à une température de la température de vieillissement ± 5 °C pendant 60 minutes ou plus, la température de vieillissement étant de 50 °C ou plus et de 60 °C ou moins.

**2.** Stratifié contenant une plaque de verre, comportant une première plaque de verre et un film de résine,

dans lequel le film de résine est assemblé à la première plaque de verre,
le film de résine comporte une résine thermoplastique et un plastifiant,
un allongement en traction du film de résine à 25 °C sous une charge de contrainte de 50 N, lorsque mesuré conformément au procédé de la description, est de 120 mm ou plus dans un essai de traction conformément à la norme JIS K7113,
la résine thermoplastique est une résine de butyral polyvinylique,
le plastifiant est le di-2-éthylhexanoate de triéthylène glycol, la teneur du plastifiant, qui est le di-2-éthylhexanoate de triéthylène glycol, dans le film de résine est de 20 parties en poids ou plus et de 40 parties en poids ou moins par rapport à 100 parties en poids de la résine thermoplastique qui est la résine de butyral polyvinylique dans le film de résine,
la température de transition vitreuse du film de résine, lorsque mesurée conformément au procédé de la description, est de 10 °C ou plus et de 40 °C ou moins, et
la résine de butyral polyvinylique est obtenue par une étape de mélange consistant à mélanger de l'alcool polyvinylique et un butyraldéhyde, et une étape de vieillissement consistant à faire vieillir une résine obtenue par l'étape de mélange,
dans laquelle l'étape de vieillissement inclut une étape de chauffage consistant à chauffer la résine obtenue par l'étape de mélange jusqu'à une température de vieillissement, et une étape de refroidissement consistant à refroidir la résine après l'étape de chauffage, le refroidissement étant démarré sans maintenir la température du contenu après chauffage à une température de la température de vieillissement ± 5 °C pendant 60 minutes ou plus, la température de vieillissement étant de 50 °C ou plus et de 60 °C ou moins.

**3.** Stratifié contenant une plaque de verre selon la revendication 2, étant fourni avec la première plaque de verre en tant que premier élément de verre feuilleté, le film de résine et un second élément de verre feuilleté,

dans lequel le film de résine est assemblé à la première plaque de verre,
le film de résine est assemblé au second élément en verre feuilleté, et
le film de résine est disposé entre la première plaque de verre et le second élément de verre feuilleté.

**4.** Procédé de production d'un film de résine, qui comporte une résine thermoplastique et un plastifiant et a un allongement en traction du film de résine à 25 °C sous une charge de contrainte de 50 N, lorsque mesuré conformément au procédé de la description, de 120 mm ou plus dans un essai de traction conformément à la norme JIS K7113, dans lequel la résine thermoplastique est une résine de butyral polyvinylique, le plastifiant est le di-2-éthylhexanoate de triéthylène glycol, la teneur du plastifiant, qui est le di-2-éthylhexanoate de triéthylène glycol, dans le film de résine est de 20 parties en poids ou plus et de 40 parties en poids ou moins par rapport à 100 parties en poids de la résine thermoplastique qui est la résine de butyral polyvinylique dans le film de résine, et la température de transition vitreuse du film de résine, lorsque mesurée conformément au procédé de la description, est de 10 °C ou plus et de 40 °C ou moins,
le procédé comportant les étapes consistant à :

obtenir la résine thermoplastique qui est la résine de butyral polyvinylique ; et mouler une composition préparée en mélangeant la résine thermoplastique, qui est la résine de butyral polyvinylique, et le plastifiant, qui est le di-2-éthylhexanoate de triéthylène glycol, pour obtenir un film de résine,
dans lequel l'étape d'obtention de la résine de butyral polyvinylique inclut une étape de mélange consistant à mélanger de l'alcool polyvinylique et un butyraldéhyde, et une étape de vieillissement consistant à faire vieillir une résine obtenue par l'étape de mélange, et

l'étape de vieillissement inclut une étape de chauffage consistant à chauffer la résine obtenue par l'étape de mélange jusqu'à une température de vieillissement, et une étape de refroidissement consistant à refroidir la résine après l'étape de chauffage, le refroidissement étant démarré sans maintenir la température du contenu après chauffage à une température de la température de vieillissement ± 5 °C pendant 60 minutes ou plus, la température de vieillissement étant de 50 °C ou plus et de 60 °C ou moins.

**5.** Procédé de production du stratifié contenant une plaque de verre selon l'une quelconque des revendications 2 ou 3, le procédé comportant les étapes consistant à :

obtenir la résine thermoplastique qui est la résine de butyral polyvinylique ; et
mouler une composition préparée en mélangeant la résine thermoplastique, qui est la résine de butyral polyvinylique, et le plastifiant, qui est le di-2-éthylhexanoate de triéthylène glycol, pour obtenir un film de résine, assembler le film de résine à la première plaque de verre pour obtenir le stratifié contenant la plaque de verre, dans lequel l'étape d'obtention de la résine de butyral polyvinylique inclut une étape de mélange consistant à mélanger de l'alcool polyvinylique et un butyraldéhyde, et une étape de vieillissement consistant à faire vieillir une résine obtenue par l'étape de mélange, et
l'étape de vieillissement inclut une étape de chauffage consistant à chauffer la résine obtenue par l'étape de mélange jusqu'à une température de vieillissement, et une étape de refroidissement consistant à refroidir la résine après l'étape de chauffage, le refroidissement étant démarrée sans maintenir la température du contenu après chauffage à une température de la température de vieillissement ± 5 °C pendant 60 minutes ou plus, la température de vieillissement étant de 50 °C ou plus et de 60 °C ou moins.

[FIG. 1]

[FIG. 2]

[FIG. 3]

[FIG. 4]

[FIG. 5]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005018969 A1
- JP 2005112694 A
- JP 2008303140 A
- JP 2004067427 A
- US 20060183833 A1